# EUROPEAN PATENT APPLICATION

(11) **EP 4 521 364 A1**
(43) Date of publication of application: **12.03.2025**
(21) Application number: 24199826.9
(22) Date of filing: 11.09.2024
(51) Int. Cl.: G06V 20/62, G06V 20/58, G06V 30/10

(54) **SYSTEM, METHOD, AND APPARATUS FOR AUTOMATED VALIDATION CHECKS OF LICENSE PLATE RECOGNITION SYSTEM AT PARKING FACILITY**

(30) Priority: 11.09.2023 US 202363581838 P; 10.09.2024 US 202418830158
(71) Applicant: Tyco Fire & Security GmbH, 8212 Neuhausen am Rheinfall (CH)
(72) Inventor: OUELLETTE, Jason M., 8212 Neuhausen am Rheinfall (CH); LINDSEN, Gilbert Patrick Maria, 8212 Neuhausen am Rheinfall (CH); VAN HEESWIJK, Joost, 8212 Neuhausen am Rheinfall (CH); DRENT, Marcel, 8212 Neuhausen am Rheinfall (CH)
(74) Representative: Meissner Bolte Nürnberg

(57) **Abstract**

Example implementations include a method, apparatus, system, and computer-readable medium of using a robot to validate a license plate recognition check at a parking facility, comprising identifying license plate information of a license plate. The implementations further include associating the license plate information with a parking spot. Additionally, the implementations further include storing the license plate information in association with the parking spot. Additionally, the implementations further include checking the license plate information in association with the parking spot against a parking facility monitoring system (40).

## Description

### CROSS-REFERENCE TO RELATED APPLICATION

This patent application claims the benefit of U.S. Provisional Application No. 63/581,838, filed on September 11, 2023, titled "SYSTEM, METHOD, AND APPARATUS FOR AUTOMATED VALIDATION CHECKS OF LICENSE PLATE RECOGNITION SYSTEM AT PARKING FACILITY." The disclosure of the prior application is hereby incorporated by reference in its entirety.

### BACKGROUND

### Technical Field

The described aspects relate to validation checks of license plate recognition systems at parking facilities using one or more robots.

### Introduction

Tracking and maintaining an accurate record of vehicles located at a parking facility can be difficult. License plate recognition systems may miss vehicles entering or exiting the parking facility, count vehicles multiple times, or otherwise lose track of data such as the number of vehicles in the parking facility.

### SUMMARY

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

Aspects of the present disclosure relate generally to robotic validation of parking facility systems, and more particularly, to ensuring accurate, current information about a population of vehicles located at a parking facility.

An example aspect includes a method of using a robot to validate a license plate recognition check at a parking facility, comprising identifying license plate information of a license plate. The method further includes associating the license plate information with a parking spot. Additionally, the method further includes storing the license plate information in association with the parking spot. Additionally, the method further includes checking the license plate information in association with the parking spot against a parking facility monitoring system.

Another example aspect includes a robot apparatus to validate a license plate recognition check at a parking facility, comprising one or more memories and one or more processors coupled with the one or more memories. The one or more processors are configured to identify license plate information of a license plate. The one or more processors are further configured to associate the license plate information with a parking spot. Additionally, the one or more processors are further configured to store the license plate information in association with the parking spot. Additionally, the one or more processors are further configured to check the license plate information in association with the parking spot against a parking facility monitoring system.

Another example aspect includes a robot apparatus to validate a license plate recognition check at a parking facility, comprising means for identifying license plate information of a license plate. The apparatus further includes means for associating the license plate information with a parking spot. Additionally, the apparatus further includes means for storing the license plate information in association with the parking spot. Additionally, the apparatus further includes means for checking the license plate information in association with the parking spot against a parking facility monitoring system.

Another example aspect includes a system for validating a license plate recognition check at a parking facility, comprising a license plate recognition check subsystem. The apparatus further includes a parking facility monitoring station. Additionally, the apparatus further includes one or more robots, wherein each of the one or more robots comprises one or more cameras, one or more mobility subsystems, and one or more memories. Additionally, each of the one or more robots further comprises one or more processors that are individually or in combination configured to identify license plate information of a license plate, associate the license plate information with a parking spot, store the license plate information in association with the parking spot; and communicate with the parking facility monitoring station to check the stored license plate information in association with the parking spot.

Another example aspect includes a computer-readable medium having instructions stored thereon for using a robot to validate a license plate recognition check at a parking facility, wherein the instructions are executable by one or more processors to identify license plate information of a license plate. The instructions are further executable to associate the license plate information with a parking spot. Additionally, the instructions are further executable to store the license plate information in association with the parking spot. Additionally, the instructions are further executable to check the license plate information in association with the parking spot against a parking facility monitoring system.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

The disclosed aspects will hereinafter be described in conjunction with the appended drawings, provided to illustrate and not to limit the disclosed aspects, wherein like designations denote like elements, wherein dashed lines may indicate optional elements, and in which:
Fig. 1 is a system architecture diagram of an example parking facility having components configured to perform a method of using a robot to validate a license plate recognition check;
Fig. 2 is a block diagram of an example of a parking facility monitoring station having components configured to interface with a robot to validate a license plate recognition check at a parking facility;
Fig. 3 is a diagram of a robot;
Fig. 4 is a block diagram of an example of a computer device having components configured to perform a method of using a robot to validate a license plate recognition check at a parking facility;
Fig. 5 is a flowchart of an example of a method of using a robot to validate a license plate recognition check at a parking facility;
Fig. 6 is a flowchart of additional aspects of the method of Fig. 5;
Fig. 7 is a flowchart of additional aspects of the method of Fig. 5;
Fig. 8 is a flowchart of additional aspects of the method of Fig. 5;
Fig. 9 is a flowchart of additional aspects of the method of Fig. 5; and
Fig. 10 is a flowchart of additional aspects of the method of Fig. 5.

### DETAILED DESCRIPTION

Various aspects are now described with reference to the drawings. In the following description, for purposes of explanation, numerous specific details are set forth in order to provide a thorough understanding of one or more aspects. It may be evident, however, that such aspect(s) may be practiced without these specific details.

Aspects of the present disclosure relate generally to robotic validation of parking facility systems. In various aspects, one or more robots can autonomously navigate through a parking facility and identify license plate information from license plates of vehicles, associate the license plate information with parking spot information, check information against license plate recognition (LPR) information of a parking facility management system, and maintain current counts of vehicles in the parking facility.

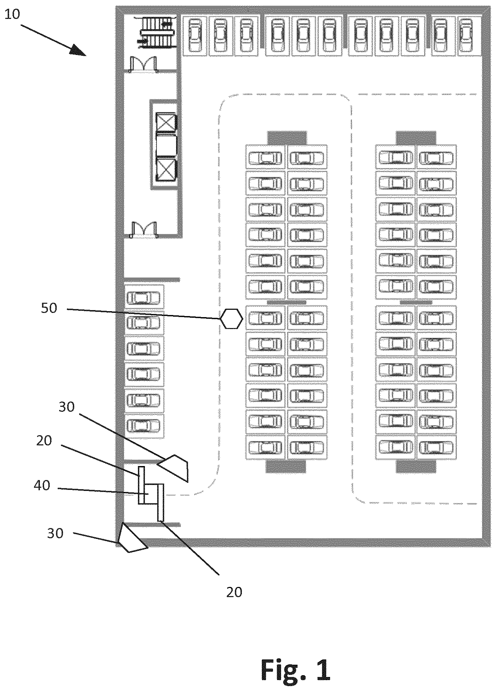

In one implementation, for example, the one or more robots identify license plate information of parked vehicles in the parking facility and validate this information against what vehicles one or more LPR cameras (e.g., at the entry and/or exit of the parking facility) of the parking facility management system detected and registered as parked in the parking facility. Further, in an alternative or additional aspect, if the one or more robots detect license plate information of a vehicle that is not registered as parked in the parking facility, the one or more robots can notify the parking facility management system and initiate adding the license plate information and/or corresponding vehicle information to the records of parked vehicles in the parking facility managed by the parking facility management system. Moreover, in another alternative or additional aspect, if the one or more robots detect that license plate information (and/or corresponding vehicle information) that is in the records as corresponding to a vehicle that is parked in the parking facility is missing, e.g., the one or more robots do not detect a license plate corresponding to the license plate information in the parking facility, then the one or more robots initiate removal of the undetected license plate information from the records of parked vehicles in the parking facility managed by the parking facility management system, for instance without the need of human intervention. Thus, in the systems, apparatuses, and methods of the present disclosure, the one or more robots autonomously interact with the parking facility management system to identify license plate information of parked vehicles or missing vehicle, and can initiate updating of the records of parked vehicles in the parking facility managed by the parking facility management system in order to improve an accuracy of vehicles parked in the parking facility. Referring to Fig. 1, a parking facility 10 can include a parking lot, parking garage, and/or other parking structure and can include one or more gates 20, e.g., at an entrance and/or exit with a mechanism to prevent a vehicle from directly entering and/or leaving the parking facility 10 without checking in (e.g., with a badge or taking a card) or checking out (e.g., with a badge or by paying a fee). Situated at or near the gates 20 can be one or more cameras 30 (e.g., LPR cameras) that are configured to capture an image and/or video of a vehicle license plate and identify license plate information, including alphanumeric codes, symbols, and/or other machine-readable and/or human-readable codes now in use or later developed as the corresponding vehicle enters or leaves the parking facility 10. In some aspects, the license plate information, and/or the corresponding image or video, can be transmitted and saved at a parking facility monitoring station 40, for instance, in order to determine when a vehicle has entered parking facility 10, if the vehicle is still located at parking facility 10, and when the vehicle has left parking facility 10. This license plate information can be used to determine information related to parking spot occupancy or availability within the parking facility 10. For example, the parking facility monitoring station 40 may include a parking facility monitoring system, either locally or at a remote server (e.g., connected to the parking facility monitoring station 40 by a wired or wireless connection), that uses the license plate information to track vehicles entering and leaving the parking facility 10. More specifically, this information can also be used in determining a total car count, occupancy, vacancy, and other information about the population of vehicles in the parking facility 10. However, in some instances, tracked information may be incorrect. For example, when license plates are read near the exit or entrance, it is possible that the license plate is read incorrectly, or the vehicle does not follow an expected behavior (e.g., entering through an exit lane, entering and immediately leaving, traveling through an entrance or exit faster than expected, or others). Such errors may lead to an inaccurate record of vehicles in the parking facility 10. Over time these errors can compound and lead to frustration for drivers and lost revenue for parking facility 10 owners and businesses associated with parking facility 10 (e.g., if parking facility 10 is used primarily for retail customers).

In aspects herein, one or more robots 50 can autonomously travel about parking facility 10 and provide a check of whether vehicle counts are correct, e.g., based on comparing robot-detected license plate information versus license plate information of parked vehicles as registered with the parking facility monitoring system, and/or determine what parking spots (e.g., a space designated and/or designed for a vehicle such as a car, truck, moped, motorcycle, scooter, and/or other vehicle to park and remain) or type of parking spot (e.g., unreserved or reserved) vehicles are parked in, and other related information. For example, the robot 50 may identify license plate information of a license plate and associate the license plate information with a vehicle being parked in the parking facility, and/or with a type of parking spot or a specific parking spot. The robot 50 may store the license plate information in association with a record of a vehicle being parked in the parking facility (e.g., in computer readable memory including one or more data structures such as a list and/or database), and in some cases additionally with the type of parking spot or the specific identifier (e.g., space number) of the parking spot. The robot 50 and/or the parking facility monitoring system may check the robot-detected license plate information of vehicles detected within the parking facility 10 against records of parked vehicles stored in the parking facility monitoring system (e.g., by checking one or more data structures such as a list and/or database stored in computer readable memory).

For instance, in one implementation, the robot 50 may receive the records of parked vehicles stored in the parking facility monitoring system from the parking facility monitoring station 40 (e.g., via a wired or wireless communication link), and compare detected license plate information against the license plate information in the records to determine if the count of occupied or unoccupied parking spots in the parking facility 10 is accurate. If there is a discrepancy (e.g., a deviation from one or more expected conditions), the robot 40 can send a message with the discrepancy information (e.g., license plate information that is not detected but that is in the records, license plate information that is detected but not in the records, an updated total parked vehicle count (or adjustment to a total) or updated vehicle count per parking spot type (or adjustment to such a total)) to the parking facility monitoring system and/or the parking facility monitoring station 40 so that the system records can be updated to be accurate.

In other aspects, the robot 50 may send the detected license plate information to the parking facility monitoring system and/or the parking facility monitoring station 40, which may then use the received information to determine accuracy of the system records.

In some implementations, the parking facility monitoring system and/or the parking facility monitoring station 40 may then utilize the updated and accurate records of license plate information to present available parking spot information and/or to manage entry of vehicles into the parking facility 10.

For example, the parking facility monitoring system and/or the parking facility monitoring station 40 may generate parking spot status information, which can be displayed to a user of the system and/or which may be displayed by a display device of the parking facility monitoring station 40. For instance, the parking spot status information can identify a number of unoccupied (e.g., available) parking spots in the parking facility 10. In some cases, this may include identification of the number of unreserved spaces that are available.

In another example, the parking facility monitoring system and/or the parking facility monitoring station 40 may manage entry of new vehicles into the parking facility 10 by limiting the number of vehicles allowed entry to the number of available parking spots. Moreover, in cases where the parking facility includes reserved parking spots, the parking facility monitoring system and/or the parking facility monitoring station 40 may compare the license plate information of a vehicle attempting to enter the parking facility to a record of registered license plate information associated with reserved parking spots, which can enable the system to allow a vehicle to enter and park in a reserved parking spot even when there are no unreserved parking spots available but there are reserved parking spots available.

Thus, the systems, methods, and apparatus of the present disclosure can help improve security, improve compliance, improve safety, improve adherence to parking facility rules, increase revenue, and reduce detrimental effects of incorrect information in a parking facility management system.

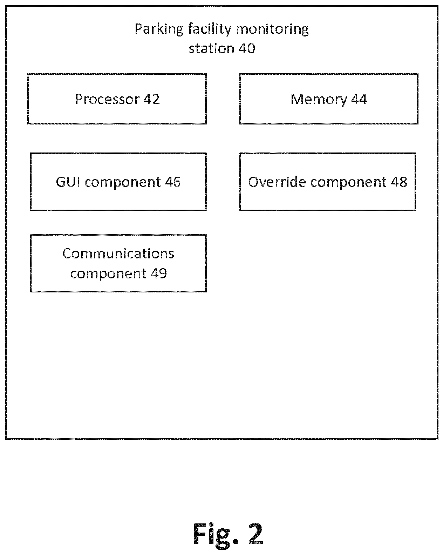

Referring to Fig. 2, a parking facility monitoring station 40 can include one or more memories 44 and one or more processors 42 that are configured to perform parking facility monitoring functions. Examples of such functions can include monitoring a total number of vehicles in the parking facility, maintaining accurate information about the vehicles that are located at the parking facility, and communicating with robots 50 via communications component 49. A GUI component 46 can display information for user review such as parking and vehicle data, alerts, alarms, notifications, and others. An override component 48 can allow a user to override an operation of the robots 50.

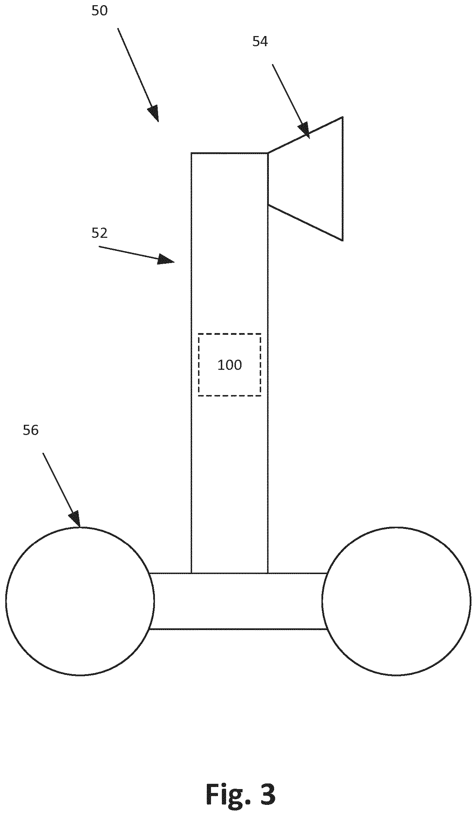

Referring to Fig. 3, a robot 50 can include a body 52, which may comprise one or more housings, structural components, supports, and other components. Body 52 can be coupled to or integrated with a mobility subsystem 56 that can include a chassis, axle, one or more wheels, treads, and other components for movement. Body 52 can also be coupled to, house, or be integrated with one or more cameras 54 that are configured to capture image(s) and/or video(s) of vehicle license plates and/or parking space identifiers (e.g., numbers painted on the grounds or posted signs). Body 52 can also be coupled to, house, or be integrated with a robot control computer device 100.

In various aspects a robot can be a physical device, apparatus, and/or machine. A robot can include or possess one or more abilities and/or functions, including: electronic programming; one or more sensors operable and/or configured to sense one or more aspects of the physical world; operability and/or configuration to perform data processing; movement through the physical world; autonomy to perform one or more tasks with limited and/or no direct human control; and one or more interaction mechanisms configured to allow interaction with one or more objects and/or people in the physical world.

Electronic programming can include instructions, algorithms, and/or computer code that is stored in non-transitory computer readable memory. When executed by one or more processors, electronic programming can cause one or more processes, actions, and/or operations to occur. Processes, actions, and/or operations can include physical movements, acquiring data, and/or processing data.

One or more sensor(s) configured to sense one or more aspect(s) of the physical world can include physical sensors and/or receptors such as photodiodes and/or other light sensors in one or more spectrums; one or more lasers; one or more still and/or video cameras; one or more chemical sensors operable and/or configured to sense one or more chemicals such as carbon monoxide, carbon dioxide, oxygen, water, water vapor, and/or a multitude of other chemicals; one or more audio sensors such as audio receivers, transceivers, and/or microphones; and/or one or more proximity sensors operable and/or configured to sense proximity, distance, presence and/or absence of one or more objects in the physical world.

Operability and/or configuration to perform data processing can include one or more processor(s) working alone and/or in conjunction with one or more other processor(s) to process data. Data can include information sensed by the one or more sensor(s).

Movement through the physical world can include one or more component(s), system(s), and/or subsystem(s) (e.g., mobility subsystem 56) that are operable and/or configured for movement, propelling, and/or propulsion through the physical world, including by driving, walking, flying, swimming, etc. Examples can include one or more wheel(s); one or more continuous track(s) and/or tracked tread(s); one or more jointed leg(s) and/or feet; one or more actuator(s), driver(s); one or more propeller(s), airfoil(s) and/or rotor(s); one or more engine(s); one or more air, water, and/or chemical propulsion system(s); one or more ski(s) and/or sled(s); one or more form(s) of propulsion via exhaust and/or jets; and the various physical support and/or coupling mechanisms including one or more chassis, axles, rotors, locking mechanisms, ratcheting mechanisms, power systems, and/or housings.

Autonomy to perform one or more tasks with limited and/or no direct human control can include electronic programming stored in non-transitory computer readable memory that when executed by one or more processor(s) causes the robot to perform one or more tasks, such as sensing, moving, interacting, object avoiding, alerting, notifying, charging, sending and/or receiving data, storing data, and/or executing received commands.

One or more interaction mechanisms configured to allow interaction with one or more objects and/or people in the physical world can include one or more speakers, lights and/or indicators, grabbers, pushers, couplings, placement mechanisms for depositing one or more items such as paper tickets and/or stickers.

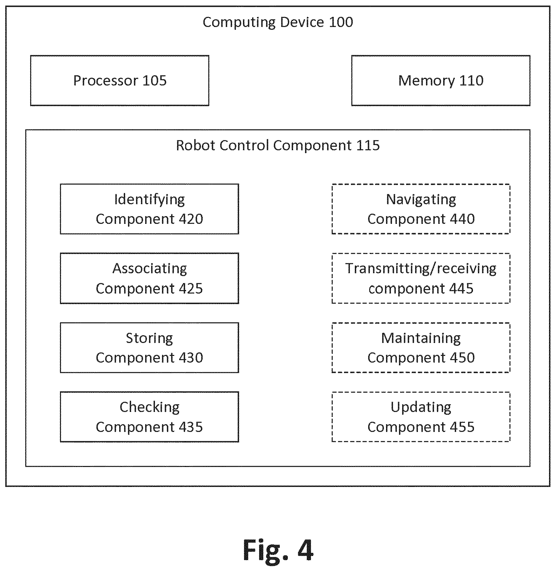

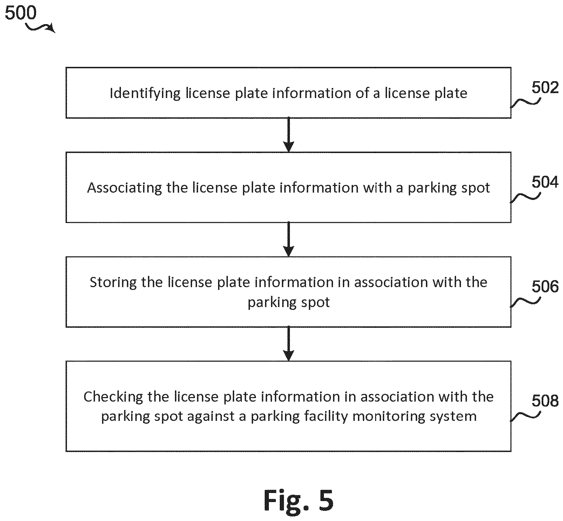

Referring to Fig. 4 and Fig. 5, in operation, computer device 100 may perform a method 500 of using a robot to validate a license plate recognition check at a parking facility, such as via execution of robot control component 115 by one or more processors 105 and/or one or more memories 110.

At block 502, the method 500 includes identifying license plate information of a license plate. For example, in an aspect, computer device 100, one or more processors 105, one or more memories 110, robot control component 115, and/or identifying component 420 may be configured to or may comprise means for identifying license plate information of a license plate.

For example, the identifying at block 502 may include the one or more processors 105 using an identifying component 420 (e.g., a camera) to capture one or more images of a license plate. The one or more processors 105 can cause the identifying component 420 to perform character recognition or otherwise identify license plate information (e.g., alphanumeric or other symbols) of the license plate.

Further, for example, the identifying at block 502 may be performed in order to identify a vehicle.

At block 504, the method 500 includes associating the license plate information with a parking spot. For example, in an aspect, computer device 100, one or more processors 105, one or more memories 110, robot control component 115, and/or associating component 425 may be configured to or may comprise means for associating the license plate information with a parking spot.

For example, the associating at block 504 may include associating the license plate information with a parking spot. In an aspect the one or more processors 105 can use GPS, Wi-Fi, an inertial module unit (IMU) (i.e., that determines an orientation and/or direction) or other means to identify a parking spot and then associates the identified license plate information with the parking spot.

Further, for example, the associating at block 504 may be performed in order to accurately maintain a parking spot register and/or database over time.

At block 506, the method 500 includes storing the license plate information in association with the parking spot. For example, in an aspect, computer device 100, one or more processors 105, one or more memories 110, robot control component 115, and/or storing component 430 may be configured to or may comprise means for storing the license plate information in association with the parking spot.

For example, the storing at block 506 may include the one or more processors 105 causing the license plate information to be stored in association with the parking spot in the storing component 430 (e.g., a current database of vehicles in parking spots).

Further, for example, the storing at block 506 may be performed in order to accurately maintain a parking spot register and/or database over time and check parking facility data.

At block 508, the method 500 includes checking the license plate information in association with the parking spot against a parking facility monitoring system. For example, in an aspect, computer device 100, one or more processors 105, one or more memories 110, robot control component 115, and/or checking component 435 may be configured to or may comprise means for checking the license plate information in association with the parking spot against a parking facility monitoring system.

For example, the checking at block 508 may include the one or more processors 105 causing the checking component 435 to check the license plate information in association with the parking spot against a parking facility monitoring system. In some aspects, this can include using a transmitting/receiving component 445 to gather and or send information.

Further, for example, the checking at block 508 may be performed in order to accurately maintain a parking spot register and/or database over time.

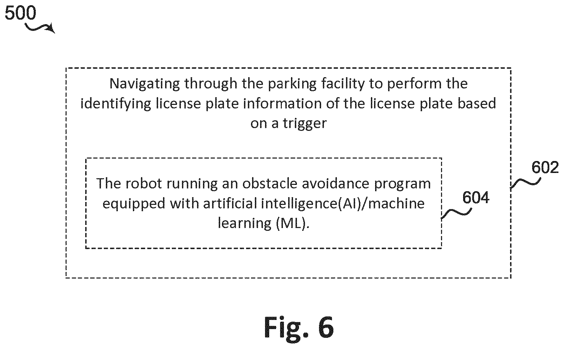

Referring to Fig. 6, in an alternative or additional aspect, at block 602, the method 500 may further include navigating through the parking facility to perform the identifying license plate information of the license plate based on a trigger.

A trigger can be a condition and/or set of conditions stored in computer readable memory that, when present, existing, and/or occurring, causes a subsequent action to occur via execution of one or more instructions stored in computer readable memory and associated with the trigger. Examples of triggers include a timer starting or expiring, identification of a vehicle entering and/or leaving a parking facility, a scheduled time and/or date, identification of a person and/or object in a path, receiving a command via a wireless network, and/or one or more other events.

For example, in an aspect, computer device 100, one or more processors 105, one or more memories 110, robot control component 115, and/or navigating component 440 may be configured to or may comprise means for navigating through the parking facility to perform the identifying license plate information of the license plate based on a trigger.

For example, the navigating at block 602 may include the one or more processors 105 causing the navigating component 440 to travel within the parking facility in order to perform functions while avoiding obstacles. In some aspects navigating can be along preselected and/or preset routes and at preset times and/or schedules. In some aspects navigating can be performed on an ad hoc basis.

Further, for example, the navigating at block 602 may be performed in order to determine a vehicle population and location of vehicles over time in the parking facility.

Examples of navigating can include driving, walking, flying, and/or other means of movement in the physical world.

In some aspects, a robot can include one or more indicators to drivers and/or pedestrians nearby in a parking facility. For example, the robot can include lighting, speakers, or other components that can be used to alert drivers and/or pedestrians of the robot's presence.

In an alternative or additional aspect, the trigger is caused by an anomaly. An anomaly can be an event that is unusual, rare, impossible, and/or otherwise outside the norm of common events. In this aspect, the anomaly may be associated with an entry and exit timing event. In this aspect, the anomaly may be associated with the license plate. For example, a trigger can occur if the parking facility monitoring system detects that a vehicle has entered and exited too quickly in rapid succession according to a timer (e.g., within 8 seconds).

In an alternative or additional aspect, the trigger occurs via a manual user selection. For example, a user (e.g., a human operator or monitor of a parking facility) monitoring the robot 50 via parking facility monitoring station 40 can select a trigger event (e.g., check all parking spots or check selected parking spots) that is sent and/or transmitted wirelessly via communications component 49 to robot 50. Selection of a trigger event can occur via a user interface of a general and/or special purpose computing device such as a computer, tablet, smartphone, or other robot controlling computing device.

In an alternative or additional aspect, the trigger is based on a schedule. For example, one or more robots 50 can be set to patrol the parking facility once every hour or once every twenty minutes. Schedules can be stored in computer readable memory and set and/or variable and can be modified in various aspects.

In an alternative or additional aspect, the trigger is associated with the parking spot. For example, a parking spot can be assigned to a particular driver/vehicle and if the parking facility determines that the parking spot is inappropriately occupied by a vehicle that is not assigned to the parking spot, the robot can be triggered to determine if there has been a mistake and/or if the determination is accurate.

In this optional aspect, at block 604, the navigating at block 602 of the robot through the parking facility comprises the robot running an obstacle avoidance program equipped with artificial intelligence(AI)/machine learning (ML) via one or more processor(s) executing instructions stored in computer readable memory. In some aspects, this can include learning to avoid pedestrians, items such as bags/luggage, shopping carts, cars, motorcycles, scooters, bicycles, animals, or others that have been identified via one or more sensor(s) by the robot. Avoidance can occur when traveling or when stationary (e.g., if the robot has stopped but a car's reverse indicator lights turn on, the robot may move out of the way of the reversing car). AI/ML can include execution of one or more algorithms stored in computer readable memory that update predictions, events, conditions, and/or processes based on one or more feedback loops that use real world data and/or information to improve operations and/or functionality. AI/ML can include improving the ability of one or more systems and/or subsystems to predict future events based on statistical analysis of observed and/or identified current and/or past events.

For example, the one or more processors 105 can execute one or more AI/ML programs, routines, and/or sub-routines and data can be captured and stored and the robot can learn when, where, and how to move safely in the parking facility environment.

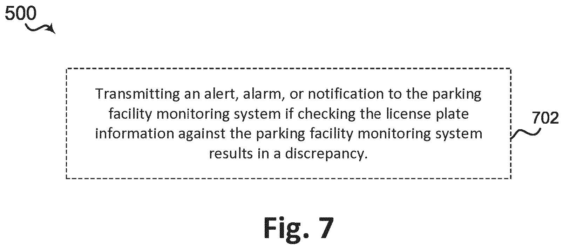

Referring to Fig. 7, in an alternative or additional aspect, at block 702, the method 500 may further include transmitting, via a wireless network, an alert, alarm, or notification to the parking facility monitoring system if checking the license plate information against the parking facility monitoring system results in a discrepancy. For example, in an aspect, computer device 100, one or more processors 105, one or more memories 110, robot control component 115, and/or transmitting/receiving component 445 may be configured to or may comprise means for transmitting, via a wireless network, an alert, alarm, or notification to the parking facility monitoring system if checking the license plate information against the parking facility monitoring system results in a discrepancy.

For example, the transmitting at block 702 may include the one or more processors 105 causing the transmitting/receiving component 445 to transmit the alert, alarm, or notification to the parking facility monitoring system 40 via a wireless network.

Further, for example, the transmitting at block 702 may be performed in order for a user to review the discrepancy, in order to update the system data, or for other reasons.

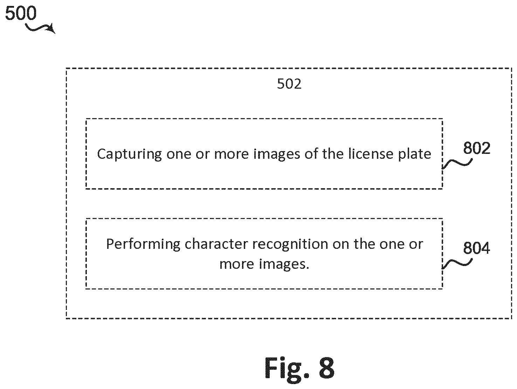

Referring to Fig. 8, in an alternative or additional aspect, at block 802, the identifying at block 502 of license plate information of the license plate comprises capturing one or more images of the license plate via one or more camera(s).

For example, one or more processors 105 can cause identifying component 420 to use camera 54 to capture one or more images of the license plate and/or video of the license plate.

In this optional aspect, at block 804, the identifying at block 502 of license plate information of the license plate comprises performing character recognition on the one or more images.

For example, one or more processors 105 can cause identifying component 420 to perform character recognition on the one or more images in order to identify alphanumeric or other symbols or codes. Character recognition can include identifying individual characters, symbols, or codes and comparing with one or more characters, symbols, or codes stored in computer readable memory.

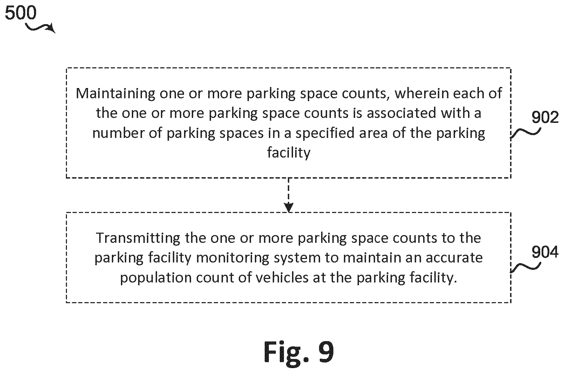

Referring to Fig. 9, in an alternative or additional aspect, at block 902, the method 500 may further include maintaining one or more parking space counts, wherein each of the one or more parking space counts is associated with a number of parking spaces in a specified area of the parking facility. For example, in an aspect, computer device 100, one or more processors 105, one or more memories 110, robot control component 115, and/or maintaining component 450 may be configured to or may comprise means for maintaining one or more parking space counts, wherein each of the one or more parking space counts is associated with a number of parking spaces in a specified area of the parking facility.

For example, the maintaining at block 902 may include the one or more processors 105 to cause or use maintaining component 450 to maintain one or more parking space counts. Maintaining can include storing information and/or data in computer readable memory.

Further, for example, the maintaining at block 902 may be performed in order to accurately measure and maintain information about the number of vehicles in the parking facility and their specific locations.

In this optional aspect, at block 904, the method 500 may further include transmitting, via a wireless network, the one or more parking space counts to the parking facility monitoring system to maintain an accurate population count of vehicles at the parking facility. For example, in an aspect, computer device 100, one or more processors 105, one or more memories 110, robot control component 115, and/or transmitting/receiving component 445 may be configured to or may comprise means for transmitting, via a wireless network, the one or more parking space counts to the parking facility monitoring system to maintain an accurate population count of vehicles at the parking facility.

For example, the transmitting at block 904 may include one or more processors 105 causing transmitting/receiving component 445 to send the data to parking facility monitoring station 40 via a wireless network.

Further, for example, the transmitting at block 904 may be performed so that a user and/or the system can review the accuracy of the information and any discrepancies that may be revealed.

In an alternative or additional aspect, the license plate information is reviewable by a user of the parking facility monitoring system. For example, license plate information can be stored in local or remote computer readable memory, which is accessible by a processor that can then cause the license plate information to be displayed via a user interface of a computing device for human review.

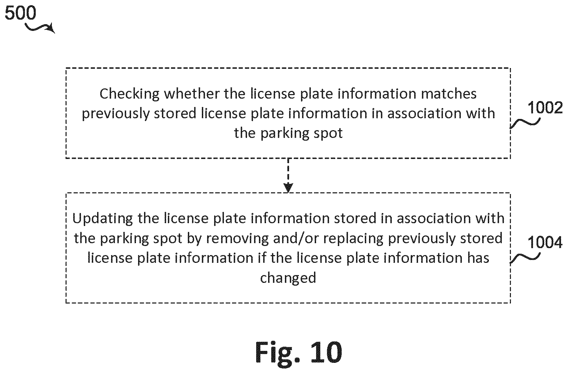

Referring to Fig. 10, in an alternative or additional aspect, at block 1002, the method 500 may further include checking whether the license plate information matches previously stored license plate information in association with the parking spot. For example, in an aspect, computer device 100, one or more processors 105, one or more memories 110, robot control component 115, and/or checking component 435 may be configured to or may comprise means for checking whether the license plate information matches previously stored license plate information stored in computer readable memory in association with the parking spot.

For example, the checking at block 1002 may include one or more processors 105 causing checking component 435 to check whether the license plate information matches previously stored license plate information in association with the parking spot. For example, such information may have been previously stored during a prior check by robot 50.

Further, for example, the checking at block 1002 may be performed in order to determine if the same vehicle(s) are located in the same spot(s) to maintain accurate information about the vehicles and their locations in the parking facility.

In this optional aspect, at block 1004, the method 500 may further include updating the license plate information stored in association with the parking spot by removing and/or replacing previously stored license plate information if the license plate information has changed. For example, in an aspect, computer device 100, one or more processors 105, one or more memories 110, robot control component 115, and/or updating component 455 may be configured to or may comprise means for updating the license plate information stored in association with the parking spot by removing and/or replacing previously stored license plate information if the license plate information has changed.

For example, the updating at block 1004 may include one or more processors 105 causing updating component to update license plate information stored in association with the parking spot if the information has changed. Updating can include removing and/or deleting old, expired, and/or erroneous information from a location in computer readable memory and storing new, updated, and/or correct information in its place. In some aspects, updating can include overwriting old, expired, and/or erroneous information with new, updated, and/or correct information in its place.

Further, for example, the updating at block 1004 may be performed in order to maintain an accurate record about the vehicles and their locations in the parking facilities.

In some aspects, multiple parking facilities can be managed at a central hub location. For example, one parking facility may be a parking lot, one parking facility may be a multi-level garage structure, and one parking facility may be a building integrated underground parking area. In some aspects, robots for all facilities connected together can be managed from the central hub location. In some aspects, robots can be indoor, outdoor, or combination of indoor and outdoor operable

In some aspects, vehicle attributes can be used to supplement and provide more accurate records. For example, robots can be configured to check vehicle colors, manufacturers, models, location in preassigned spaces, and other attributes in order to maintain accurate records.

In some aspects, vehicles can include motorcycles, scooters, trucks, vans, and other types of vehicles and devices that users might leave in a designation location or spot within a parking facility.

In some aspects a vehicle may have multiple drivers and information about the drivers can be stored in association with vehicle license plate information in order to ensure proper locations and counts within the parking facility. For example, a boss may drive a work van, have his credentials checked by badge when entering the parking facility, and park in a designated spot on a certain day, which the system will be able to determine is allowable. On another day, an employee may be driving the work van and not be allowed to park in the designated spot. Robots will be able to determine such discrepancy in some aspects.

In some aspects, metering and/or duration/length of time in a parking spot can be tracked and monitored using robots.

In some aspects, alarms, alerts, and/or notifications sent by a robot can include an indicator that a parking spot is full (e.g., via a parking spot presence counter configured to determine the presence of a vehicle in a parking spot), that a parking spot is empty, that a vehicle in a parking spot it is not authorized to be in, that a vehicle is in a spot that it is authorized to be in, that there is a discrepancy between data stored by a parking facility monitoring system and data captured by the robot, that there is no discrepancy between data stored by a parking facility monitoring system, that a particular number or percentage of parking spots is occupied and/or vacant, that a vehicle is occupying too many parking spots (e.g., double parked or parked on or over a line), that a vehicle with no license plate is in a parking spot, that a vehicle has been in a parking spot for a particular amount of time, that a vehicle has been in a parking spot longer than an allotted time, that a vehicle is nearing an allotted time for being in a parking spot, that a vehicle is breaking a parking facility rule in a parking spot (e.g., backed into a head-in only parking spot, oversized in a compact car spot, or otherwise). In various aspects, different levels of alarms, alerts, and/or notifications can trigger or result in different functions at a parking facility monitoring station (e.g., pop-up, flashing indicator, static indicator of a GUI; audible sound at a speaker, or others).

In some aspects, images and/or data from a robot can be viewed in real-time at a parking facility monitoring station. In some aspects, a user can override an automated process of the robot (e.g., a user can remote control the robot via a user interface of the parking facility monitoring station).

In some aspects, robots can have a home area at or near a parking facility. At the home area, robots can be serviced and robot batteries can be charged. In various aspects, robots can return to the home area based on particular robot statuses. For example, if a robot completes an vehicle check or patrol operation, if a robot needs to recharge its batteries, if a robot is involved in a minor collision, if a robot's imaging system is compromised, or otherwise, the robot can return to the home area.

In some aspects, time stamps can be recorded and stored and/or included with images/video captured by robots. This can allow for searching of time stamps using smart video/image searches based on a vehicle description. This can be used to provide justification of and support investigations if necessary based on automated updates performed by the robot.

In various aspects, a parking facility monitoring system can include robot management and/or control functions, in addition to parking facility monitoring functions. Accompanying this disclosure as Appendix A is a parking facility monitoring system manual that details various aspects of a parking facility management system and their functions. Further embodiments of the present invention may be summarized as follows. Any of these embodiments can be claimed in a separate claim, e.g. by substituting the word "Clause" by "Claim", in particular in the order as mentioned below and/or in any combination with any embodiment described above or with any of the features of the attached claims:
Clause 1. A method of using a robot to validate a license plate recognition check at a parking facility, comprising: identifying license plate information of a license plate; associating the license plate information with a parking spot; storing the license plate information in association with the parking spot; and checking the license plate information in association with the parking spot against a parking facility monitoring system.
Clause 2. The method of any one or any combination of the preceding clauses, further comprising: navigating through the parking facility to perform the identifying license plate information of the license plate based on a trigger.
Clause 3. The method of any one or any combination of the preceding clauses, wherein the trigger is caused by an anomaly.
Clause 4. The method of any one or any combination of the preceding clauses, wherein the anomaly is associated with an entry and exit timing event.
Clause 5. The method of any one or any combination of the preceding clauses, wherein the anomaly is associated with the license plate.
Clause 6. The method of any one or any combination of the preceding clauses, wherein the trigger occurs via a manual user selection.
Clause 7. The method of any one or any combination of the preceding clauses, wherein the trigger is based on a schedule.
Clause 8. The method of any one or any combination of the preceding clauses, wherein the trigger is associated with the parking spot.
Clause 9. The method of any one or any combination of the preceding clauses, wherein navigating through the parking facility comprises the robot running an obstacle avoidance program equipped with artificial intelligence(AI)/machine learning (ML).
Clause 10. The method of any one or any combination of the preceding clauses, further comprising: transmitting an alert, alarm, or notification to the parking facility monitoring system if checking the license plate information against the parking facility monitoring system results in a discrepancy.
Clause 11. The method of any one or any combination of the preceding clauses, wherein identifying license plate information of the license plate comprises: capturing one or more images of the license plate; and performing character recognition on the one or more images.
Clause 12. The method of any one or any combination of the preceding clauses, further comprising: maintaining one or more parking space counts, wherein each of the one or more parking space counts is associated with a number of parking spaces in a specified area of the parking facility.
Clause 13. The method of any one or any combination of the preceding clauses, further comprising: transmitting the one or more parking space counts to the parking facility monitoring system to maintain an accurate population count of vehicles at the parking facility.
Clause 14. The method of any one or any combination of the preceding clauses, wherein the license plate information is reviewable by a user of the parking facility monitoring system.
Clause 15. The method of any one or any combination of the preceding clauses, further comprising: checking whether the license plate information matches previously stored license plate information in association with the parking spot.
Clause 16. The method of any one or any combination of the preceding clauses, further comprising: updating the license plate information stored in association with the parking spot by removing and/or replacing previously stored license plate information if the license plate information has changed.
Clause 17. A robot apparatus to validate a license plate recognition check at a parking facility, comprising: one or more memories; and one or more processors coupled with the one or more memories, wherein the one or more processors are configured, individually or in combination, to: identify license plate information of a license plate; associate the license plate information with a parking spot; store the license plate information in association with the parking spot; and check the license plate information in association with the parking spot against a parking facility monitoring system.
Clause 18. The robot apparatus of any one or any combination of the preceding clauses, wherein the one or more processors are further configured to: navigate through the parking facility to perform the identifying license plate information of the license plate based on a trigger.
Clause 19. The robot apparatus of any one or any combination of the preceding clauses, wherein the trigger is caused by an anomaly.
Clause 20. The robot apparatus of any one or any combination of the preceding clauses, wherein the anomaly is associated with an entry and exit timing event.
Clause 21. The robot apparatus of any one or any combination of the preceding clauses, wherein the anomaly is associated with the license plate.
Clause 22. The robot apparatus of any one or any combination of the preceding clauses, wherein the trigger occurs via a manual user selection.
Clause 23. The robot apparatus of any one or any combination of the preceding clauses, wherein the trigger is based on a schedule.
Clause 24. The robot apparatus of any one or any combination of the preceding clauses, wherein the trigger is associated with the parking spot.
Clause 25. The robot apparatus of any one or any combination of the preceding clauses, wherein navigating through the parking facility comprises the robot running an obstacle avoidance program equipped with artificial intelligence(AI)/machine learning (ML).
Clause 26. The robot apparatus of any one or any combination of the preceding clauses, wherein the one or more processors are further configured to: transmit an alert, alarm, or notification to the park facility monitoring system if checking the license plate information against the parking facility monitoring system results in a discrepancy.
Clause 27. The robot apparatus of any one or any combination of the preceding clauses, wherein to identify license plate information of the license plate comprises to: capture one or more images of the license plate; and perform character recognition on the one or more images.
Clause 28. The robot apparatus of any one or any combination of the preceding clauses, wherein the one or more processors are further configured to: maintain one or more parking space counts, wherein each of the one or more parking space counts is associated with a number of parking spaces in a specified area of the parking facility.
Clause 29. The robot apparatus of any one or any combination of the preceding clauses, wherein the one or more processors are further configured to: transmit the one or more parking space counts to the park facility monitoring system to maintain an accurate population count of vehicles at the parking facility.
Clause 30. The robot apparatus of any one or any combination of the preceding clauses, wherein the license plate information is reviewable by a user of the parking facility monitoring system.
Clause 31. The robot apparatus of any one or any combination of the preceding clauses, wherein the one or more processors are further configured to: check whether the license plate information matches previously stored license plate information in association with the parking spot.
Clause 32. The robot apparatus of any one or any combination of the preceding clauses, wherein the one or more processors are further configured to: update the license plate information stored in association with the parking spot by removing and/or replacing previously stored license plate information if the license plate information has changed.
Clause 33. A system for validating a license plate recognition check at a parking facility, comprising: a license plate recognition check subsystem; a parking facility monitoring station; and one or more robots, wherein each of the one or more robots comprises: one or more cameras; one or more mobility subsystems; one or more memories; and one or more processors that are individually or in combination configured to: identify license plate information of a license plate; associate the license plate information with a parking spot; store the license plate information in association with the parking spot; and communicate with the parking facility monitoring station to check the stored license plate information in association with the parking spot.
Clause 34. The system of any one or any combination of the preceding clauses, wherein the license plate recognition check subsystem comprises: one or more cameras configured to capture images of a license plate upon entry and exit of the parking facility; and a parking spot presence counter configured to determine the presence of a vehicle in a parking spot.
Clause 35. The system of any one or any combination of the preceding clauses, wherein the parking facility monitoring station comprises: one or more databases; one or more graphical user interfaces; and one or more processors that are individually or in combination configured to: display parking information via the graphical user interface for review by a user.
Clause 36. The system of any one or any combination of the preceding clauses, wherein the parking information comprises one or more of a total parking space occupancy count, a total parking space vacancy count, a robot status indicator, an alert, an alarm, a notification, license plate information, and parking spot information.
Clause 37. The system of any one or any combination of the preceding clauses, wherein the one or more robots autonomously patrol the parking facility.

While the foregoing disclosure discusses illustrative aspects and/or embodiments, it should be noted that various changes and modifications could be made herein without departing from the scope of the described aspects and/or embodiments as defined by the appended claims. Furthermore, although elements of the described aspects and/or embodiments may be described or claimed in the singular, the plural is contemplated unless limitation to the singular is explicitly stated. Additionally, all or a portion of any aspect and/or embodiment may be utilized with all or a portion of any other aspect and/or embodiment, unless stated otherwise.

## Claims

1. A method (500) of using a robot (50) to validate a license plate recognition check at a parking facility (10), comprising:
identifying (502) license plate information of a license plate;
associating (504) the license plate information with a parking spot;
storing (506) the license plate information in association with the parking spot; and
checking (508) the license plate information in association with the parking spot against a parking facility monitoring system (40).

2. The method (500) of claim 1, further comprising:
navigating (602) through the parking facility (10) to perform the identifying license plate information of the license plate based on a trigger.

3. The method (500) of claim 2, wherein the trigger is caused by an anomaly.

4. The method (500) of claim 3, wherein the anomaly is associated with at least one of an entry and exit timing event or the license plate.

5. The method (500) of any of claims 2 to 4, wherein the trigger is based on at least one of a manual user selection or a schedule, or is associated with the parking spot.

6. The method (500) of any of claims 2 to 5, wherein navigating through the parking facility (10) comprises the robot (50) running (604) an obstacle avoidance program equipped with artificial intelligence(AI)/machine learning (ML).

7. The method (500) of any of claims 1 to 6, further comprising:
transmitting (702) an alert, alarm, or notification to the parking facility monitoring system (40) if checking the license plate information against the parking facility monitoring system (40) results in a discrepancy.

8. The method (500) of any of claims 1 to 7, wherein identifying license plate information of the license plate comprises:
capturing (802) one or more images of the license plate; and
performing character recognition (804) on the one or more images.

9. The method (500) of any of claims 1 to 8, further comprising:
maintaining (902) one or more parking space counts, wherein each of the one or more parking space counts is associated with a number of parking spaces in a specified area of the parking facility (10); and
transmitting (904) the one or more parking space counts to the parking facility monitoring system (40) to maintain an accurate population count of vehicles at the parking facility (10).

10. The method (500) of any of claims 1 to 9, wherein the license plate information is reviewable by a user of the parking facility monitoring system (40).

11. The method (500) of any of claims 1 to 10, further comprising:
checking (1002) whether the license plate information matches previously stored license plate information in association with the parking spot; and
updating (1004) the license plate information stored in association with the parking spot by removing and/or replacing previously stored license plate information if the license plate information has changed.

12. A robot apparatus (50) to validate a license plate recognition check at a parking facility (10), comprising:
one or more memories (110); and
one or more processors (105) coupled with the one or more memories (110), wherein the one or more processors (105) are configured, individually or in combination, to:
identify (502) license plate information of a license plate;
associate (504) the license plate information with a parking spot;
store (506) the license plate information in association with the parking spot; and
check (508) the license plate information in association with the parking spot against a parking facility monitoring system (40).

13. The robot apparatus (50) of claim 12, wherein the one or more processors (105) are further configured to:
navigate (602) through the parking facility (10) to perform the identifying license plate information of the license plate based on a trigger,
wherein navigating through the parking facility (10) comprises the robot (50) running (604) an obstacle avoidance program equipped with artificial intelligence(AI)/machine learning (ML).

14. The robot apparatus (50) of claim 12 or 13, wherein the one or more processors (105) are further configured to:
transmit (702) an alert, alarm, or notification to the park facility monitoring system if checking the license plate information against the parking facility monitoring system (40) results in a discrepancy.

15. The robot apparatus (50) of any of claims 12 to 14, wherein to identify license plate information of the license plate comprises to:
capture (802) one or more images of the license plate; and
perform character recognition (804) on the one or more images.
